# EUROPEAN PATENT APPLICATION

(11) **EP 4 415 293 A1**
(43) Date of publication of application: **14.08.2024**
(21) Application number: 21959700.2
(22) Date of filing: 08.10.2021
(51) Int. Cl.: H04L 5/00

(54) **COMMUNICATION METHOD AND COMMUNICATION APPARATUS**

(71) Applicant: Beijing Xiaomi Mobile Software Co., Ltd., Beijing Beijing 100085 (CN)
(72) Inventor: DONG, Xiandong, Beijing 100085 (CN)
(74) Representative: Kudlek, Franz Thomas
(86) International application number: PCT/CN2021/122671
(87) International publication number: WO 2023/056608

(57) **Abstract**

Provided in the present disclosure are a communication method and a communication apparatus. The communication method may comprise: determining a multi-station block acknowledgment message from an access point device supporting multi-link communication; and sending the multi-station block acknowledgment message to a first station device and a second station device under a first link, the first station device being a device that supports single-link communication with an access point device, the second station device being a device that supports multi-link communication with the access point device, and the first link being a block acknowledge feedback link established between the first station device and the access point device. The technical solution provided in the exemplary embodiments of the present disclosure can increase a spectrum utilization rate.

## Description

### TECHNICAL FIELD

The present disclosure relates to the field of wireless communication and, in particular, to a communication method and device in multiple links.

### BACKGROUND

The current Wi-Fi technology is studied for 320MHz bandwidth transmission and multi-band aggregation and coordination, etc., and is expected to be able to improve at least four times the rate and throughput relative to the existing standard. The main application scenarios include video transmission, Augmented Reality (AR), and Virtual Reality (VR), etc.

The multi-band aggregation and coordination refers to the communication between devices simultaneously in 2.4GHz, 5GHz, and 6GHz frequency bands, etc. A new Media Access Control (MAC) mechanism needs to be defined to manage the communication between devices simultaneously in multiple frequency bands. In addition, it is expected that the multi-band aggregation and coordination can support low-latency transmission.

The maximum bandwidth that will be supported in the current multi-band aggregation and system technologies is 320MHz (160MHz+160MHz), with 240MHz (160MHz+80MHz) bandwidth and other bandwidths likely to be supported.

In the current technology, a Station (STA) or an Access Point (AP) may be a multi-link device (MLD), i.e., a device that supports the function of sending and/or receiving data in multiple links. Accordingly, in the current technology, there may be multiple links between the STA and the AP, and research is being conducted on the communication between these two devices in multiple links.

In the current technology, two MLDs can negotiate the Block Acknowledgement (BA) feedback mode, and the feedback mode of multiple stations for BA, i.e., the feedback mode of multi-STA BA, can be supported. That is, the AP provides feedback on the reception status of the data sent by multiple STAs. In addition, based on the current technology, there can be a mixed case of a station that supports single-link communication and a station that supports multi-link communication in a communication environment. However, the current technology lacks an effective mechanism for applying the multi-STA BA feedback mode in this mixed case.

### SUMMARY

Aspects of the present disclosure will address at least the above problems and/or disadvantages. Various embodiments of the present disclosure provide the following technical solutions.

According to some exemplary embodiments of the present disclosure, there is provided a communication method including: determining, by an access point device that supports multi-link communication, a multi-station block acknowledgement message; and sending, in a first link, the multi-station block acknowledgement message to a first station device and a second station device, wherein the first station device supports single-link communication with the access point device, the second station device supports multi-link communication with the access point device, and the first link is a connection that the first station device establishes block acknowledgement feedback with the access point device.

According to some exemplary embodiments of the present disclosure, there is provided a communication method including: in a case where a communication environment includes a first station device and a second station device, receiving a multi-station block acknowledgement message in a first link from an access point device that supports multi-link communication; wherein the first station device supports single-link communication with the access point device, the second station device supports multi-link communication with the access point device, and the first link is a connection that the first station device establishes block acknowledgement feedback with the access point device.

According to some exemplary embodiments of the present disclosure, there is provided a communication device including: a processing module configured to determine a multi-station block acknowledgement message; and a transceiver module configured to send, in a first link, the multi-station block acknowledgement message to a first station device and a second station device, wherein the first station device supports single-link communication with the access point device, the second station device supports multi-link communication with the access point device, and the first link is a connection that the first station device establishes block acknowledgement feedback with the access point device.

According to some exemplary embodiments of the present disclosure, there is provided a communication device including: a transceiver module configured to receive a multi-station block acknowledgement message in a first link from an access point device that supports multi-link communication in a case where a communication environment includes a first station device and a second station device, wherein the first station device supports single-link communication with the access point device, the second station device supports multi-link communication with the access point device, and the first link is a connection that the first station device establishes block acknowledgement feedback with the access point device.

According to some exemplary embodiments of the present disclosure, there is provided an electronic device including a memory, a processor, and a computer program stored on the memory and runnable on the processor, wherein the processor, when executing the computer program, performs the methods as described above.

According to some exemplary embodiments of the present disclosure, there is provided a computer-readable storage medium on which is stored a computer program which, when executed by a processor, causes the processor to perform the methods as described above.

Exemplary embodiments of the present disclosure provide technical solutions that enable the BA feedback mechanism to be applied to a scenario where both a station that supports single-link communication and a station that supports multiple-link communication are present, improving spectrum utilization.

### BRIEF DESCRIPTION OF THE DRAWINGS

The above and other features of embodiments of the present disclosure will be made more apparent by describing in detail the exemplary embodiments of the present disclosure with reference to the accompanying drawings.
FIG. 1 is a flowchart of a communication method illustrated according to embodiments of the present disclosure.
FIG. 2 is a detailed schematic diagram of a communication method illustrated according to embodiments of the present disclosure.
FIG. 3 is a flowchart of a communication method illustrated according to embodiments of the present disclosure.
FIG. 4 is a block diagram of a communication device illustrated according to embodiments of the present disclosure.

### DETAILED DESCRIPTION

The following description with reference to the accompanying drawings is provided to assist in fully understanding the various embodiments of the present disclosure as defined by the appended claims and their equivalents. The various embodiments of the present disclosure include various specific details, but these specific details are considered exemplary only. In addition, descriptions of well-known techniques, functions, and constructions may be omitted for clarity and brevity.

Terms and phrases used in the present disclosure are not limited to their written meaning, but are used only by the inventors, so that the present disclosure can be clearly and consistently understood. Accordingly, the description of various embodiments of the present disclosure is provided for illustrative purposes only, and not for limiting purposes, to those skilled in the art.

It is to be understood that the singular forms, e.g., "one", "a", "an" and "this" used herein may also encompass the plural forms, unless the context clearly indicates otherwise. It is to be further understood that the term "including" as used in the present disclosure refers to the presence of the described features, integers, steps, operations, elements, and/or components, but does not preclude the presence or addition of one or more other features, integers, steps, operations, elements, components, and/or groups thereof.

It is to be understood that although the terms "first", "second", etc. may be used herein to describe various elements, these elements should not be limited by these terms. These terms are only used to distinguish one element from another. Thus, without departing from the teachings of the exemplary embodiments, a first element discussed below may also be referred to as a second element.

It is to be understood that when an element is described as "connected" or "coupled" to another element, it may imply that an element may be directly connected or coupled to another element, or that an intermediate element may also exist between an element and another element. In addition, "connected" or "coupled" as used herein may include wirelessly connected or wirelessly coupled. The term "and/or" or the expression "at least one of..." or "at least one" as used herein includes any and all combinations of one or more of the relevant listed items.

Unless otherwise defined, all terms used herein, including technical and scientific terms, have the same meaning as generally understood by those of ordinary skill in the art to which this disclosure belongs.

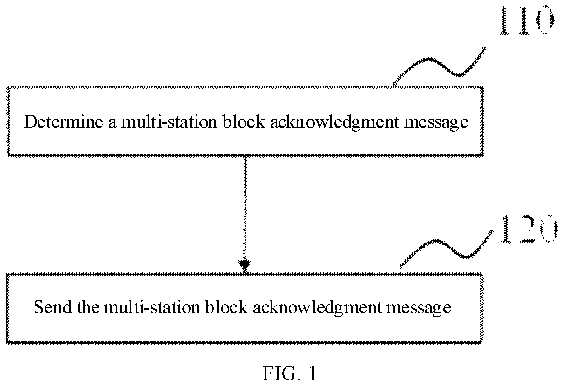

FIG. 1 is a flowchart of a communication method illustrated according to embodiments of the present disclosure. The communication method shown in FIG. 1 may be applied to an access point device that supports multi-link communication, which may hereinafter be referred to as an access point multi-link device (AP MLD).

The access point device is a wireless switch used for wireless networks and is also an access device for wireless networks. The access point device may be used as a wireless base station that is mainly used as a bridge to connect wireless networks to wired networks. This access point device allows the integration of wired and wireless networks.

The access point device may include software applications and/or circuitry to enable other types of nodes in the wireless network to communicate with the outside of the wireless network as well as the inside the wireless network via the access point device. In some examples, the access point device may, for example, be a terminal device or network device equipped with a Wireless Fidelity (Wi-Fi) chip.

In a Basic Service Set (BSS) consisting of AP MLDs, there may be a station that supports single-link communication (which may hereinafter be referred to as "pre-802.11be STA", e.g., 802.11ax STA) and a station that supports multi-link communication (which may hereinafter be referred to as "802.11be STA"), and the multi-STA BA mechanism is also applied to them (i.e., a scenario where pre-802.11be STA and 802.11be STA are present in a mixture). Furthermore, in an existing BA feedback approach, BA feedback may be performed in any link where a Traffic Identifier (TID) is mapped. However, in the above-described scenarios where pre-802.11be STA and 802.11be STA are present in a mixture, since pre-802.11be STA supports only single-link communication, such an approach of performing BA feedback in any link where the TID is mapped cannot be applied to the multi-STA BA mechanism. In view of this, a communication method is proposed according to embodiments of the present disclosure.

Referring to FIG. 1, in step 110, a multi-station block acknowledgement message is determined by an access point device (AP MLD) that supports multi-link communication. In some embodiments of the present disclosure, the determined multi-station block acknowledgement message may be a multi-STA BA. That is, the access point device may provide feedback on the reception status of the data sent by a plurality of STAs. For example, the AP MLD may determine the multi-STA BA based on whether data sent by the plurality of STAs has been received. It is to be understood that in the description of the present disclosure, the term "message" may refer to a frame having a particular format (e.g., an Action frame, etc.), without specific limitation of the present disclosure.

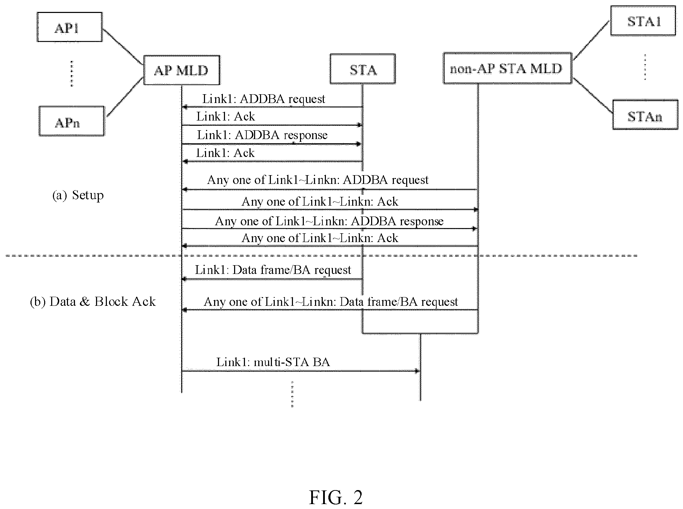

In step 120, the multi-station block acknowledgement message (e.g., multi-STABA) determined in step 110 is sent to the first station device and the second station device in the first link. In some embodiments of the present disclosure, the first station device may be a device that supports single-link communication with the AP MI,D, i.e., pre-802.11be STA, such as STA to be described with reference to FIG. 2. The second station device may be a device that supports multi-link communication with the AP MLD, i.e., 802.11be STA, such as non-AP STA MLD to be described with reference to FIG. 2. The first link is a connection that the first station device (e.g., STA) establishes the block acknowledgement feedback with the AP MLD, e.g., Link1 to be described with reference to FIG. 2.

According to some embodiments of the present disclosure, since the pre-802.11be STA only supports the single-link communication, if there is a scenario where both pre-802.11be STA and 802.11be STA are present and there is a need to feed back a multi-STA BA, the AP MLD may provide feedback in the link that pre-802.11be STA establishes the BA feedback with the AP MLD, and in addition, the 802.11be STA needs to receive the multi-STA BA in this link.

As a descriptive embodiment, the multi-station block acknowledgement message (e.g., multi-STABA) in steps 110 and 120 may be a delayed block acknowledgment message. Since the AP MLD, according to the embodiments of the present disclosure, provides feedback on the reception status of data sent by a plurality of STAs at one time, the multi-station block acknowledgement message for such feedback may be a delayed block acknowledgement message, and this BA feedback mode saves signaling, thereby contributing to power saving of the device.

According to some embodiments of the present disclosure, the multi-station block acknowledgement message in step 120 may be sent based on a multicast address assigned to the first station device and the second station device. Alternatively, the multi-station block acknowledgement message in step 120 may be sent based on a broadcast address as a receiving address for the multi-station block acknowledgement message. For example, multicast addresses may be assigned to the pre-802.11be STA and the 802.11be STA (non-AP STAMLD) before the establishment or setup of BA, or the receiving address of the BA fed back by the AP MLD may be used as a broadcast address. In an embodiment of the present disclosure, via the multicast address, the AP MLD may send the multi-station block acknowledgement message to the station devices within a group identified by the multicast address. In another embodiment of the present disclosure, via the broadcast address, the AP MLD may send the multi-station block acknowledgement message via broadcast, in which case the multi-station block acknowledgement message may include information related to an Association Identifier (AID) of a station. For the station by which the multi-station block acknowledgement message is received, the AID can be parsed out to determine if the received multi-station block acknowledgement message is a feedback for the data sent by the station itself. Compared to the method using the broadcast address, the method using the multicast address is more power efficient for a station that does not need to receive the multi-station block acknowledgement message. Compared to the method using the multicast address, the method using the broadcast address can simplify the communication process by not assigning multicast addresses in advance.

The communication method according to embodiments of the present disclosure may enable the BA feedback mechanism to be applied to a scenario where both pre-802.11be STA and 802.11be STA are present to improve spectrum utilization.

It is to be understood that the communication method shown in FIG. 1 is only exemplary and the present disclosure is not limited thereto. For example, a communication method according to embodiments of the present disclosure will be described in detail below with reference to FIG. 2.

Referring to FIG. 2, an AP MLD may denote an access point that supports multi-link communication capabilities; a non-AP STA MLD may denote a station that supports multi-link communication capabilities (e.g., 802.11be STA), that is the second station device as described with reference to FIG. 1; and an STA may denote a station that supports single-link communication (e.g., pre-802.11be STA), that is the first station device as described with reference to FIG. 1. For example, each of the first station device and the second station device may include, but are not limited to: a cellular phone, a smart phone, a wearable device, a computer, a personal digital assistant (PDA), a personal communication system (PCS) device, a personal information manager (PIM), a personal navigation device (PND), a global positioning system (GPS), a multimedia device, an Internet of Things (IoT) device, etc. It is to be understood that although only one first station device (STA) and one second station device (non-AP STA MLD) are shown in FIG. 2, embodiments of the present disclosure are not limited thereto, and the AP MLD may be in BA communication with more first station devices and more second station devices.

In FIG. 2, the AP MLD may operate in n links, such as attached AP1 to APn, and the non-AP STA MLD may operate in n links, such as attached STA1 to STAn, wherein n is an integer greater than or equal to 2, and the number of links, n, may be determined based on the hardware configurations and communication capabilities of the AP MLD and the non-AP STA MLD. For ease of description, a BA feedback mechanism may be established or set up between the AP MLD and the non-AP STA MLD in n links (Link1 to Linkn), however, the present disclosure is not limited thereto and a BA feedback mechanism may be established or set up between the AP MLD and the non-AP STA MLD in one or more of the n links. According to some embodiments of the present disclosure, Link1 to Linkn may be multi-links at different frequencies, e.g., links under 2.4GHz, 5GHz, 6GHz, etc., or several links of the same or different bandwidths under 2.4GHz, 5GHz, 6GHz. In addition, a plurality of channels may exist in each link.

Additionally, in FIG. 2, it is illustrated that a BA may be established or set up between the AP MLD and the STA in Link1, however, the present disclosure is not limited thereto. A different link that the STA establishes the BA with the AP MLD may be determined based on the frequency and channel of the single-link communication supported by the STA, and this link may be one of multi-links (Link1 to Linkn) supported by the AP MLD and the non-AP STA MLD

Referring to FIG. 2, during the BA setup phase (a), the AP MLD may receive an add block acknowledgment request message (ADDBA request) from the STA in Link1. In this embodiment, Link1 may correspond to the first link in step 120 of FIG. 1, and the STA may correspond to the first station device described with reference to FIG. 1. That is, the communication method according to embodiments of the present disclosure illustrated in FIG. 1 may further include: receiving, in the first link, an add block acknowledgement request message from the first station device. In response to receiving the ADDBA request from the STA, the AP MLD may send an acknowledgement message (Ack) and an ADDBA response message (ADDBA response) back to the STA and then receive an Ack from the STA via Link 1. Through the above process, the BA feedback may be established or set up between the AP MLD and the first station device (STA) in the first link (Link 1).

In addition, at the BA setup stage (a), the AP MLD may receive an ADDBA request from the non-AP STA MLD, send an Ack and an ADDBA response back to the non-AP STA MLD, and then receive an Ack from the non-AP STA MLD in order to establish or set up the BA feedback with the second station device (non-AP STA MLD). According to some embodiments of the present disclosure, the link used for establishment or setup of the BA feedback between the AP MLD and the non-AP STA MLD may be the same or different from Link1. In other words, the communication method according to embodiments of the present disclosure may further include: receiving an add block acknowledgment request message (ADDBA request) from the second station device (non-AP STA MLD) in the first link described with reference to FIG. 1, or an other link different from the first link. In some embodiments of the present disclosure, the first link or the other link may be a link where a traffic identifier (TID) is mapped.

According to some embodiments of the present disclosure, via one of n links (Link1 to Linkn) supported by the AP MLD and the non-AP STA MLD, the BA feedback may be established or set up in one or more of the n links, or all of the n links. For example, this may be realized by defining an information field in the ADDBA request and the ADDBA response related to the link(s) for the establishment or setup of the BA feedback. However, embodiments of the present disclosure are not limited thereto, and the ADDBA request, Ack, and ADDBA response may be transmitted respectively in each of the n links (Link1 to Linkn) in order to realize the establishment of the BA feedback in the corresponding links, respectively.

At the data transmission & block acknowledgement stage, the AP MLD may receive one or more data frames, and a block acknowledgement request (BA request) from the first station device (STA) via the first link (Link1); and the AP MLD may receive one or more data frames, and a BA request from the second station device (non-AP STA MLD) via a link in Link1 to Linkn where the BA feedback has been established or set up. In response to receiving the BA request, the AP MLD may determine a multi-STA BA, and send the multi-STA BA to the first station device (STA) and the second station device (non-AP STA MLD) via the first link (Link1), in order to provide feedback on the reception status of the data sent by the first station device (STA) and the second station device (non-AP STA MLD).

According to some embodiments of the present disclosure, in the establishment or setup of the BA mechanism, the BA feedback mechanism can be established or set up for the non-AP STA MLD (802.11be STA) in any of the multi-links (Link1 to Linkn). The link for sending the ADDBA request frame can be any link where the TID is mapped, which may be the same as or different from the link in step 120, and the BA fed back can be a delayed BA. For pre-802.11be STA, the sending of the ADDBA request frame needs to be performed in the link (the first link or Link1) in step 120, i.e., the BA feedback is performed in the link in which the ADDBA request frame is sent.

In addition, although not shown in FIG. 2, the embodiment shown in FIG. 2 may also include a Teardown stage of the BA feedback. For example, the AP MLD may delete the BA feedback by receiving a delete BA request frame (DELBA request) from the station and sending an acknowledgement frame back to the station. For example, the AP MLD may receive a delete BA request frame (DELBA request) from the STA and the non-AP STA MLD via Link1. Alternatively, the AP MLD may receive a DELBA request from the STA via Link1, and receive a DELBA request from the non-AP STA MLD via any of the links (Link1 to Linkn).

The communication method according to embodiments of the present disclosure may enable the BA feedback mechanism to be applied to a scenario where both pre-802.11be STA and 802.11be STA are present, improving spectrum utilization.

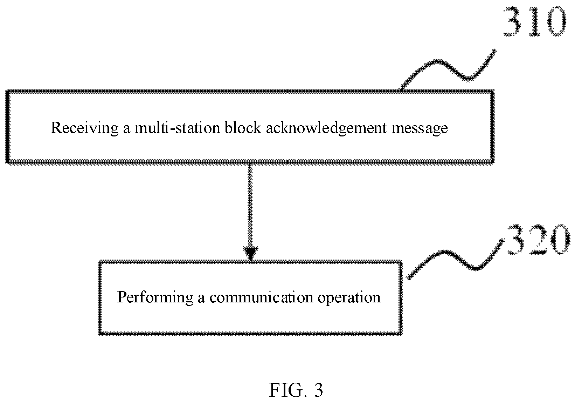

FIG. 3 is a flowchart of a communication method illustrated according to embodiments of the present disclosure. The communication method shown in FIG. 3 may be applied to stations, e.g., a station that supports single-link communication (a first station device or STA in FIG. 2) and a station that supports multi-link communication (a second station device or non-AP STA MLD in FIG. 2).

Referring to FIG. 3, in step 310, in a case where a communication environment includes a first station device and a second station device, a multi-station block acknowledgement message (e.g., multi-STABA) sent from an access point device (AP MLD) that supports multi-link communication may be received in a first link. The first station device may be a device that supports single-link communication with the access point device. The second station device may be a device that supports multi-link communication with the access point device. The first link may be a connection that the first station device establishes block acknowledgement feedback with the access point device. As described with reference to FIG. 2, the first station device STA and the second station device non-AP STA MLD may receive, via the first link Link1, the multi-STA BA sent from the APMLD.

According to some embodiments of the present disclosure, the multi-station block acknowledgement message may be a delayed block acknowledgement message.

According to some embodiments of the present disclosure, the multi-station block acknowledgement message may be sent by the access point device based on a multicast address assigned to the first station device and the second station device. Alternatively, the multi-station block acknowledgement message may be sent by the access point device based on a broadcast address as a receiving address for the multi-station block acknowledgement message.

In step 320, a communication operation may be performed based on the multi-station block acknowledgement message. For example, when both the first station device and the second station device determine, via the multi-station block acknowledgement message, that the respective data frames sent by them have been received, and if there is no other data that needs to be sent, a delete BA request frame (DELBA request) may be sent in step 320. For example, if either of the first station device and the second station device determines, via the multi-station block acknowledgement message, that the data frame sent has not been received, then, in step 320, an attempt may be made to send the data frame again.

It is to be understood that the communication method shown in FIG. 3 is only exemplary and the present disclosure is not limited thereto.

According to some embodiments of the present disclosure, the communication method shown in FIG. 3 may further include: sending, by the first station device, an add block acknowledgement request message in the first link. As described with reference to FIG. 2, the first station device STA may send an ADDBA request in Link1.

According to some embodiments of the present disclosure, the communication method shown in FIG. 3 may further include: sending, by the second station device, an add block acknowledgement request message in the first link or an other link different from the first link. According to some embodiments of the present disclosure, the first link or the other link may be a link where a traffic identifier (TID) is mapped. As described with reference to FIG. 2, the second station device non-AP STA MLD may send an ADDBA request via one or more of Link1 to Linkn.

The operations described above with reference to FIG. 2 that are performed by the first station device STA and the second station device non-AP STA MLD may also be included in the communication method shown in FIG. 3, and the repetitive description is omitted herein to avoid redundancy.

The communication method according to embodiments of the present disclosure may enable the BA feedback mechanism to be applied to a scenario where both a station that supports single-link communication and a station that supports multi-link communication are present to improve spectrum utilization.

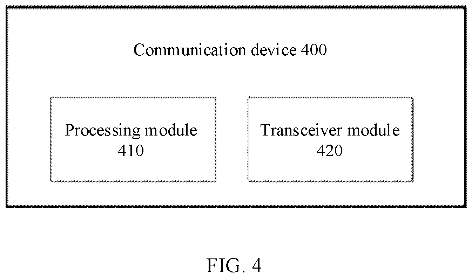

FIG. 4 is a block diagram of a communication device illustrated according to embodiments of the present disclosure.

Referring to FIG. 4, the communication device 400 may include a processing module 410 and a transceiver module 420. The communication device shown in FIG. 4 may be applied to an access point device (AP MLD) or station devices (STA and non-AP STAMLD).

In the case where the communication device shown in FIG. 4 is applied to an access point device (AP MLD), the processing module 410 may be configured to: determine a multi-station block acknowledgement message; and the transceiver module 420 may be configured to: send, in a first link, the multi-station block acknowledgement message to a first station device and a second station device. For example, the first station device may be a device supports single-link communication with the access point device; the second station device may be a device supports multi-link communication with the access point device; and the first link may be a connection that the first station device establishes block acknowledgement feedback with the access point device. In this case, the communication device 400 may perform the communication method described with reference to FIG. 1 and the operations performed by the AP MLD in FIG. 2, and repetitive descriptions are omitted herein for the sake of brevity.

In the case where the communication device shown in FIG. 4 is applied to stations devices (STA and non-AP STA MLD), the transceiver module 420 may be configured to: receive a multi-station block acknowledgement message in a first link from an access point device that supports multi-link communication in the case where a communication environment includes a first station device and a second station device; and the processing module 410 may be configured to: control the execution of a communication operation based on the multi-station block acknowledgement message. In this case, the communication device 400 may perform the communication method described with reference to FIG. 3 and the operations performed by the STA and non-AP STA MLD of FIG. 2, the repetitive descriptions of which are omitted herein for the sake of brevity.

Furthermore, the communication device 400 shown in FIG. 4 is only exemplary, and embodiments of the present disclosure are not limited thereto. For example, the communication device 400 may include other modules, such as, a memory module and the like. In addition, individual modules in the communication device 400 may be combined into a more complex module or may be divided into more separate modules.

The communication method and communication device according to embodiments of the present disclosure may enable the BA feedback mechanism to be applied to a scenario where both a station that supports single-link communication and a station that supports multiple-link communication are present, improving spectrum utilization.

Based on the same principles as the methods provided in embodiments of the present disclosure, embodiments of the present disclosure also provide an electronic device including a processor and a memory, wherein the memory stores machine-readable instructions (which may also be referred to as a "computer program"), and a processor configured to execute the machine-readable instructions to implement the method described with reference to FIGS. 1 to 3.

Embodiments of the present disclosure also provide a computer-readable storage medium having a computer program stored thereon, the computer program being executed by a processor to implement the method described with reference to FIGS. 1 to 3.

In exemplary embodiments, the processor may be logic boxes, modules, and circuits for implementing or executing various exemplary embodiments described in conjunction with the present disclosure, such as, a Central Processing Unit (CPU), a general purpose processor, a Digital Signal Processor (DSP), Application Specific Integrated Circuit (ASIC), Field Programmable Gate Array (FPGA) or other programmable logic devices, transistor logic devices, hardware components, or any combination thereof. A processor may also be a combination that implements a computing function, such as a combination containing one or more microprocessors, a combination of a DSP and a microprocessor, and the like.

In exemplary embodiments, the memory may be, for example, Read Only Memory (ROM), Random Access Memory (RAM), Electrically Erasable Programmable Read Only Memory (EEPROM), Compact Disc Read Only Memory CD-ROM () or other optical disc storage, optical disk storage (including Compact Disc, Laser Disc, CD-ROM, Digital Versatile Disc, Blu-Ray Disc, etc.), magnetic storage media, or other magnetic storage devices, or any other medium capable of carrying or storing program code in the form of instructions or data structures and accessible by a computer, without limitation.

It is to be understood that although the individual steps in the flowchart of the accompanying drawings are shown in sequence as indicated by the arrows, the steps are not necessarily executed in the order indicated by the arrows in sequence. Unless expressly stated herein, the execution of these steps is not strictly limited in order, and they may be executed in other orders. In addition, at least a portion of the steps in the flowchart of the accompanying drawings may include a plurality of sub-steps or a plurality of phases, which are not necessarily executed or completed at the same moment but may be executed at different moments, and whose order of execution is not necessarily sequential, but may be in turn or alternately with at least a portion of the other steps, or of the sub-steps or phases of the other steps.

Although the present disclosure has been shown and described with reference to certain embodiments of the present disclosure, those skilled in the art will understand that various changes in form and detail can be made without departing from the scope of the present disclosure. Accordingly, the scope of the present disclosure should not be limited to being limited by the embodiments, but rather by the appended claims and their equivalents.

## Claims

1. A communication method, comprising:
determining, by an access point device that supports multi-link communication, a multi-station block acknowledgement message; and
sending, in a first link, the multi-station block acknowledgement message to a first station device and a second station device, wherein
the first station device supports single-link communication with the access point device, the second station device supports multi-link communication with the access point device, and the first link is a connection that the first station device establishes block acknowledgement feedback with the access point device.

2. The method of claim 1, wherein the multi-station block acknowledgement message is a delayed block acknowledgement message.

3. The method of claim 1, further comprising:
receiving, in the first link, an add block acknowledgement request message from the first station device.

4. The method of claim 1, further comprising:
receiving, in the first link or an other link different from the first link, an add block acknowledgement request message from the second station device.

5. The method of claim 4, wherein the first link or the other link is a link where a traffic identifier is mapped.

6. The method of claim 1, wherein the multi-station block acknowledgement message is sent based on:
a multicast address assigned to the first station device and the second station device, or
a broadcast address as a receiving address for the multi-station block acknowledgement message.

7. A communication method, applied to a communication environment comprising a first station device and a second station device, the method comprising:
receiving a multi-station block acknowledgement message in a first link from an access point device that supports multi-link communication, wherein
the first station device supports single-link communication with the access point device, the second station device supports multi-link communication with the access point device, and the first link is a connection that the first station device establishes block acknowledgement feedback with the access point device.

8. The method of claim 7, wherein the multi-station block acknowledgement message is a delayed block acknowledgement message.

9. The method of claim 7, further comprising:
sending, by the first station device, an add block acknowledgement request message in the first link.

10. The method of claim 7, further comprising:
sending, by the second station device, an add block acknowledgement request message in the first link or an other link different from the first link.

11. The method of claim 10, wherein the first link or the other link is a link where a traffic identifier is mapped.

12. The method of claim 7, wherein the multi-station block acknowledgement message is sent by the access point device based on:
a multicast address assigned to the first station device and the second station device, or
a broadcast address as a receiving address for the multi-station block acknowledgement message.

13. A communication device, comprising:
a processing module configured to determine a multi-station block acknowledgement message; and
a transceiver module configured to send, in a first link, the multi-station block acknowledgement message to a first station device and a second station device, wherein
the first station device supports single-link communication with the access point device, the second station device supports multi-link communication with the access point device, and the first link is a connection that the first station device establishes block acknowledgement feedback with the access point device.

14. A communication device, comprising:
a transceiver module configured to receive a multi-station block acknowledgement message in a first link from an access point device that supports multi-link communication in a case where a communication environment comprising a first station device and a second station device, wherein
the first station device supports single-link communication with the access point device, the second station device supports multi-link communication with the access point device, and the first link is a connection that the first station device establishes block acknowledgement feedback with the access point device.

15. An electronic device comprising a memory, a processor, and a computer program stored on the memory and runnable on the processor, wherein the processor, when executing the computer program, performs the method of any one of claims 1 to 6 or any one of claims 7 to 12.

16. A computer-readable storage medium on which is stored a computer program which, when executed by a processor, causes the processor to perform the method of any one of claims 1 to 6 or any one of claims 7 to 12.
